# EUROPEAN PATENT SPECIFICATION

(11) **EP 3 013 753 B1**
(45) Date of publication and mention of the grant of the patent: **15.11.2017**
(21) Application number: 14748298.8
(22) Date of filing: 25.06.2014
(51) Int. Cl.: C01G 23/02, C01B 33/107, C01G 49/10, C01B 9/02, C01F 7/56, C01F 7/62, C22B 7/00

(54) **PROCESS FOR THE EXTRACTION, FROM BAUXITE OR FROM RED MUD RESULTING FROM THE PROCESSING OF BAUXITE, OF PRODUCTS OF INDUSTRIAL INTEREST SEPARATED FROM EACH OTHER**
VERFAHREN ZUR EXTRAKTION VON VONEINANDER GETRENNTEN PRODUKTEN VON INDUSTRIELLEM INTERESSE AUS BAUXIT ODER AUS ROTSCHLAMM AUS DER VERARBEITUNG VON BAUXIT
PROCÉDÉ D'EXTRACTION À PARTIR DE LA BAUXITE OU DES BOUES ROUGES RÉSULTANT DU TRAITEMENT DE LA BAUXITE DE PRODUITS PRÉSENTANT UN INTÉRÊT INDUSTRIEL SÉPARÉS LES UNS DES AUTRES

(30) Priority: 28.06.2013 IT RM20130380
(43) Date of publication of application: 04.05.2016
(73) Proprietor: Ecotec Gestione Impianti S.r.l., 96100 Siracusa (SC) (IT)
(72) Inventor: IMERITO, Aldo, I-96100 Siracusa (SR) (IT); ORRU', Riccardo, I-96100 Siracusa (SR) (IT); RAGONA, Mario, I-96100 Siracusa (SR) (IT); PISU, Massimo, I-96100 Siracusa (SR) (IT); DENOTTI, Carla, I-96100 Siracusa (SR) (IT)
(74) Representative: Iannone, Carlo Luigi
(86) International application number: PCT/IT2014/000170
(87) International publication number: WO 2014/207778

(56) References cited:
- WO-A1-2009/139715
- WO-A2-2007/001921
- US-A- 4 179 492
- US-A- 5 074 910
- WEIWEI WANG ET AL: "Metallurgical processes for scandium recovery from various resources: A review", HYDROMETALLURGY, ELSEVIER SCIENTIFIC PUBLISHING CY. AMSTERDAM, NL, vol. 108, no. 1, 5 March 2011 (2011-03-05) , pages 100-108, XP028201019, ISSN: 0304-386X, DOI: 10.1016/J.HYDROMET.2011.03.001 [retrieved on 2011-03-17]

## Description

The technical field of the present invention refers to the transformation of bauxite and red mud, which is a by-product resulting from the Bayer process for the alumina extraction, for economic and ecological purposes.

As it is known, the most used industrial process in order to obtain alumina from bauxite, is named Bayer process. The steps characterizing the process are: grinding of the bauxite;
solubilization at few tens of Celsius degrees and subsequent separation of insoluble portions; precipitation of Al(OH)₃ by temperature lowering; calcination.

In the bauxite there are Al, Ti, Fe and Si oxides at various compositions and percentages. Further exploitable compounds, at very lower yet meaningful amounts, can be present, among which there are gallium or other rare or rare-earth metal compounds.

The extraction efficiency of the Bayer process is very low and this results in the presence of large amounts of metallic elements in the processing by-products, generically called red mud. The Bayer process has, moreover, the effect that in red mud gallium or other rare or rare-earth metals are concentrated, if occurring in treated bauxite.

During the processing, various iron hydroxides occurring in bauxite are dehydrated thus forming a solid solution of *Fe₂O₃* (contains approximately 10% of *Al₂O₃*) that successively crystallizes and forms the main constituent of the red mud, whose typical chemical composition is the following one:
pH 12.5
*Fe₂O₃* 30÷60%
*Al₂O₃* 11÷20%
Ga₂O₃ traces ÷ 0,02%
*SiO₂* 2.5÷14%
*TiO₂* traces÷11%
*CaO* traces÷11%
*Na₂O* 1.5÷8%

The red mud is diluted, in order to make the same more easy pumpable and sent to a pressure filter, where some components thereof are recovered; successively, as a sludge, the same is pumped far from the plant to be disposed in artificial lagoons. Such operation results in a significant environmental impact as these by-products are not disposed effectively and they have not still industrially exploited.

The red mud, therefore, is a potentially extremely highly impacting waste, the handling thereof representing a serious problem still today. Even if currently the red mud is handled in such a way to minimize the effects thereof, however, also so, it represent an enormous human health hazard; moreover, some sites still suffer by the effects resulting from a non-corrected past treatment. The surface deposits where the red mud are stored must be constructed and managed with particular care in order to avoid contaminations of the underlying stratums and surrounding lands and prevent that powdered material to become air borne resulting in health harmful effects; in fact these dusts are strongly alkaline in nature and cause irritating effects to the skin, eyes and respiratory apparatus.

Only during the last few years studies and experimentations for an appropriate processing of these wastes have been promoted. In some cases the high aluminum content in the material suggested the modification of the production cycle in order to reduce the alkaline load, in such a way to obtain an inert mud that can be used to refill exhausted mines like substrate suitable to the re-implantation of the original vegetation or other agricultural aims or like landfill layer material for coastal areas. At last the use of red mud also in the production of building materials has been experimented.

The red mud is considered an high environmental impacting waste, processing and/or disposal thereof representing an enormous social cost.

WO 2009/139715 A1 discloses a process wherein recoverable metal compounds are introduced in a fused salt bath of aluminum chloride and alkali metal chlorides or alkaline earth metal chlorides. The aluminum chloride acts as a chlorine donor to obtain the metal chlorides which are possibly recovered by volatilisation and fractional distillation/condensation. There it is, therefore, in the specific field, the need to treat the bauxite and red mud according to a more advantageous process both from economical and environmental point of view.

This need is met by the process according to the present invention offering, moreover, further advantages which will be apparent hereinafter.

For description simplicity of the process, in the following, the expression gas or gaseous flow will be used to mean a matter flow that, depending on the chemical-physical conditions, can be entirely in gaseous phase or can be a composition of fractions that are in vapor phase and fractions that are in gas phase.

It is therefore a specific subject of the present invention a process wherein the bauxite and powdered by-products resulting from the processing of bauxite (red mud) are transformed by a multi-steps process, in individual products to be sent to the respective reference markets.

The process consists of the following steps:
- optional grinding and/or drying of the to be treated material at a temperature from 60 to 250°C;
- optional roasting in order to eliminate also the crystallization water;
- melting of the material, optionally pretreated like indicated in the previous steps, in appropriated reactor suitable to assure an operating temperature of the melting bath higher than 1350°C. According to a preferred embodiment, the reactor can be of EAF (Electric Arc Furnace) or "transferred arc plasma" type. It is necessary to melt the material so as to accelerate the reactions that will occur in the following steps;
- blowing of reactive gas, inside of the melted bath, by means of suitable systems. Good results according to the invention have been obtained using chlorine like reactive gas;
- optional mechanical stirring of the melted bath, by means of suitable systems, so as to maximize the diffusion of the reactive gas in the bath and the contact among the substances that must react. According to currently used known techniques, analogous reactions occur in reactors of "fluidized bed" type, between a solid phase material, although micronized, and a reactive gas (solid/gas phase reactions). According to the proposed process, instead, the reaction occurs between a liquid and a gaseous phase. The solubility of the gas in the liquid increases the statistical probability for the reagents collision; moreover, at the bath temperatures, the dissolved gas is partially already dissociated and therefore in a very more reactive chemical form;
- according to a preferred embodiment of the invention, when the melting reactor is of "transferred arc plasma" type, the blowing of the reactive gas can occur concurrently with the blowing inside of the melted bath, like plasma generating gas, optionally in mixture with at least an inert gas (for example argon);
- collecting of the gaseous flow exiting from the melting reactor and sending thereof, through an appropriated duct suitable to keep the temperature of the gas at least at 1500°C, towards the successive system of multi-stages reactors;
- controlled cooling of the gaseous flow, so as to assure a selective condensation of the various commercially interesting products occurring in the gas mixture. The selective condensation can be carried out using any of the known technologies among which we can mention, by an illustrative but not exhaustive way, columns, tube bundle condenser. According to a preferred embodiment, this separation occurs by a multi-stage system of serially arranged condensation columns, at controlled temperature. According to a preferred embodiment, the temperatures of the multi-stage reactors are:
- 1400°C- 900°C - sodium chloride condensation;
- 310°C - iron (III) chloride condensation;
- 201°C - gallium (III) chloride condensation
- 180°C - aluminum trichloride condensation;
- 130°C -100°C - titanium (IV) chloride condensation;
- 50°C - 25°C - silicon (IV) chloride condensation

When there are also other rare or rare-earth metals, the multi-stages sequence is modified in such a way to recover also these elements in chloride form. As above reported, in red mud produced from the processing of the bauxite according to Bayer process, the latter compounds, when present, are concentrated. Each of the condensed products, although at high purity, could not be at purity grade suitable to the respective reference market; therefore it is provided, for each line, a successive further purification system by means of fractional distillation.

Unreacted chlorine gas, as well as inert gas used in the processes, at the end of selective condensation cycles are separated, recovered and sent upstream to the process, according to a known technique (for example by an exemplary but not exhaustive way, using molecular sieves).

Particularly, according to the invention, the drying can be carried out at a temperature in the range from 100 to 115°C.

Again according to the invention the roasting can be carried out at a temperature from 600°C to 800°C.

The melted bath, according to a process variant, can be maintained at an operating temperature of approximately 1400°C - 1500°C.

Further according to the invention, the insufflated reactive gas in the melted bath can be chlorine or a chlorine compound selected from the group consisting of hydrochloric acid, calcium chloride, organochlorine compounds like, by an illustrative but not exhaustive way, carbon tetrachloride, perchloroethylene, chloroform or mixtures thereof, suitable to develop chlorine gas under reaction conditions inside of the reactor. According to a particular embodiment, when a transferred arc plasma reactor is used, the chlorine can be used like plasma generating gas, alone or along with at least one plasma generating inert gas (for example argon).

Again according to the invention, the captation of the reactor exiting gases and successive fractional condensation thereof are carried out in a multi-stage reactor system, resulting in the obtainment of commercially interesting chlorinated compounds.

In particular, according to the invention, the final products will consist of iron (III) chloride, gallium trichloride, aluminum trichloride, titanium tetrachloride, silicon tetrachloride obtainable by the previously described process, in a liquid or gaseous form.

The practice of the present invention offers the advantages described hereinafter.

The processing by means of melting reactor allows, if the method is applied for red mud, what up to now was an high harmful waste and whose disposal or processing represented an enormous social cost to be transformed in a gas mixture, consisting of metal chlorides occurring in the same waste, easily separable and suitable to be re-introduced in the economic cycle; the melting final residue in the reactor is an easy manageable solid material for successive disposal in controlled landfill.

In addition, the extraction from bauxite or red mud of iron, silicon, titanium, gallium (or other rare or rare-earth metals) and aluminum, respectively, rich fractions and the contemporary transformation thereof in inorganic chlorides are obtained.

These chlorides constitute a good commercial value material for metallurgical, chemical and electronic industries.

Bauxite matrix and red mud non-extracted residues are transformed in a non-powdered matrix.

Therefore as a whole, during the process, for example if applied for red mud, a weight and volumetric decrease, compared to layered red mud, is obtained due to the removal of water, CO₂ evolvement, and extraction of the metallic and non-metallic fractions abundantly present in the initial mud; particularly, the process allows to reduce the water content by over 40% by weight, to transform the matrix and to reduce the volume and weight thereof thus allowing a more rational use of the landfill basin, allowing longer cultivation times and an easier management of the emissions of diffused powdered materials.

The to be treated matrix is subjected to the process which, due to the reached temperature, applied electric field and reactive environment, as result of chlorine injection, transforms the iron, gallium, aluminum, silicon, titanium compounds in the corresponding chlorides which are trasferred in gaseous phase and are conveyed towards the separation sections and possible fractional distillation; the part remaining in the reactor is transformed in a not more powdered but compact residue with reduced volumetric and weight size.

Up to now a general description of the invention has been reported. With reference to enclosed unique figure and example a detailed description of the same now will be reported in order to have a better understanding of the objects, features and advantages thereof.

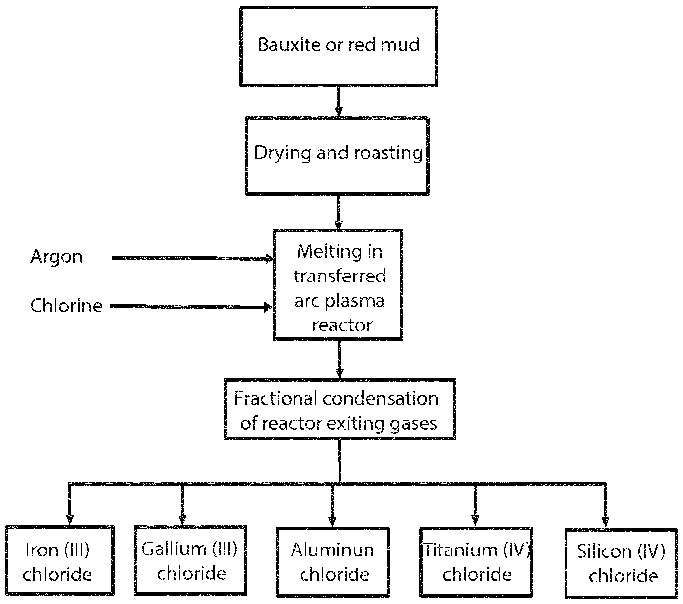

The figure (shown for clarity as figure 1) represents a block diagram of an embodiment of the process of red mud treatment, according to the invention, wherein the melting is carried out in a transferred arc plasma reactor and successive multi-stage condensation reactor.

### EXAMPLES AND FIGURES

### Example 1

In the test, red mud with a composition as listed below are used:

| wet red mud | grams | % |
|---|---|---|
| | | |
| Al₂O₃ | 144.38 | 14.44 |
| Ga₂O₃ | traces | traces |
| Fe₂O₃ | 174.08 | 17.41 |
| TiO₂ | 44.46 | 4.45 |
| SiO₂ | 82.54 | 8.25 |
| CaCO₃ | 53.92 | 5.39 |
| Na₂O | 135.38 | 13.54 |
| V₂O₅ | 7.08 | 0.71 |
| ZnO | 1.69 | 0.17 |
| P₂O₅ | 18.38 | 1.84 |
| MgO | 3.00 | 0.30 |
| MnO | 1.08 | 0.11 |
| K₂O | 3.62 | 0.36 |
| H₂O* | 99.62 | 9.96 |
| H₂O** | 230.77 | 23.08 |
| | | |
| Tot. | 1000.00 | 100.00 |

| | | |
|---|---|---|
| * imbibition water; ** crystallization water. | | |

1000 grams of sample are taken and pre-dried at a temperature of 110°C; after the imbibition water loss, the remaining amount has been calcinated at 800°C in order to eliminate the crystallization water and trigger a set of transformation processes. Particularly the following are observed:
the loss of phosphorus oxides by sublimation;
the transformation of the CaCO₃ in CaO, with CO₂ evolvement.

The mud composition after drying and calcination is reported below.

| Dried and calcined red mud | grams | % |
|---|---|---|
| | | |
| Al₂O₃ | 144.38 | 23.01 |
| Ga₂O₃ | 0.172 | <0.02 |
| Fe₂O₃ | 174.08 | 27.74 |
| TiO₂ | 44.46 | 7.09 |
| SiO₂ | 82.54 | 13.15 |
| CaO | 30.21 | 4.81 |
| Na₂O | 135.38 | 21.57 |
| V₂O₅ | 7.08 | 1.13 |
| ZnO | 1.69 | 0.27 |
| P₂O₅ | 0.00 | 0.00 |
| MgO | 3.00 | 0.48 |
| MnO | 1.08 | 0.17 |
| K₂O | 3.62 | 0.58 |
| H₂O* | 0.00 | 0.00 |
| H₂O** | 0.00 | 0.00 |
| | | |
| Tot. | 627.52 | 100.00 |

After drying and calcination, the mud sample was placed inside of the reactor.

The reactor used in the test consists of a stainless steel AISI 316 external body, insulated inside by coating with high temperature refractory material. According to this configuration, the cathode consists of metallic bar approximately 1 centimeter apart from the anode, while the latter is placed at the bottom of the reactor body and consists of a steel disc acting as an electrode. The cathode is moved with constant rotating speed approximately 1 centimeter apart from the reactor wall; in such a way, in addiction to act as an electrode, it has also the function to favor the remixing of the to be treated sample.

The sample firstly is melted under argon atmosphere. Once such melted state has been reached, chlorine through nozzles, that are partially dipped and partially externally placed with respect to melted bath, is injected, in order to start a set of reactions; in the described example approximately 950 g of chlorine has been injected.

As result of the chlorine injection, among others, the following reactions occur:
Al₂O₃ + 3Cl₂ → 2 AlCl₃ + 3/2 O₂;
Ga₂O₃ + 3Cl₂ → 2 GaCl₃ + 3/2 O₂
Fe₂O₃ + 3Cl₂ → 2 FeCl₃ + 3/2 O₂;
SiO₂ + 2Cl₂ → SiCl₄ + O₂;
TiO2 + 2Cl₂ → TiCl₄ + O₂;
Na₂O + Cl₂ → 2 NaCl + 1/2 O₂;

At the end of the process a gas, wherein there are four fractions of interest, is obtained:
fraction A - iron chloride enriched;
fraction B - gallium chloride enriched;
fraction C - aluminum chloride enriched;
fraction D - titanium tetrachloride enriched;
fraction E - silicon chloride enriched.

The separation of these fractions occurs due to column fractional condensation by means of the control of condensation temperatures; in such a way it is possible the four fractions yet in gaseous state to be separated, driving the condensation of various compounds by means of the temperature control.

The gas is firstly cooled by heat exchange and heated at a temperature near to 1000°C. In such a way sodium chloride occurring in the gas mixture is condensed in appropriated cooled sections and thus it is extracted from the interest gas mixture; afterwards the residual gas moves towards the first condensation column, where the gas temperature is further lowered in order the fractional condensation process to be started.

In the first column, the temperature is approximately 290°C, lower than the boiling temperature of iron chloride. In such a way the passage to the liquid state of the iron chloride has obtained with a purity of 95.5%; the remainder consists of gallium chloride traces, aluminum chloride, titanium chloride, and silicon chloride as major gas components. Approximately 310 g of iron chloride are thus obtained.

The fraction of non-condensed gas, containing gallium chloride, aluminum chloride, titanium chloride and silicon chloride, as commercially interesting products, flows up to second condensation column, wherein the temperature is adjusted and set approximately at 190-180°C, lower than boiling temperature of gallium chloride. By operating in such a way, the passage to the liquid state of gallium chloride has obtained. All non-condensed material is a gas consisting of aluminum chloride, titanium chloride and silicon chloride as major components. Approximately 0.172 g of gallium chloride is obtained. The fraction of non-condensed gas, containing aluminum chloride, titanium chloride and silicon chloride, as commercially interesting products, flows up to third condensation column, wherein the temperature is adjusted and set at 155-160°C, lower than boiling temperature of aluminum chloride. By operating in such a way, the passage to the liquid state of aluminum chloride with purity of 96% has obtained; the impurities mainly consist of titanium chloride inclusions and, partially, silicon chloride. All not condensed material is a gas consisting of titanium chloride and silicon chloride as major components. Approximately 256.3 g of aluminum chloride are obtained.

The fraction of not condensed gas, containing titanium chloride and silicon chloride, as commercially interesting products, flows up to fourth condensation column, wherein the temperature is adjusted and set approximately at 110 - 120°C, lower than boiling temperature of titanium chloride. By operating in such a way, the passage to the liquid state of titanium chloride with purity of 97.5% has obtained; the impurities mainly consist of silicon chloride. Non-condensed silicon chloride proceeds up to the fourth column. Approximately 185.15 g of titanium chloride are obtained.

The temperature in the fifth and last column is maintained almost equal to room temperature, lower than the boiling temperature of the silicon chloride. By operating in such a way, the condensation of the latter product has been obtained. Practically all the 170 g of present silicon chloride have been condensed. The percentage of silicon chloride out the total occurring in column is 99%, in addition to other chloride traces: approximately 250 g.

Each of the fractions thus obtained can be further purified, by means of distillation and re-condensation, in successive specific sections.

The present invention has been described by an illustrative, but not limitative way, according to preferred embodiments thereof, but it is to be understood that variations and/or modifications thereof could be carried out by those skilled in the art without thus departing from the relevant scope as defined by the enclosed claims.

## Claims

1. A process for the extraction, from bauxite and from red mud resulting from the processing of bauxite, of products of industrial interest, separated from each other, said process comprising the following steps:
- optional grinding and/or drying of the to be treated material at a temperature from 60 to 250°C;
- optional roasting of the dried material;
- melting of the resulting material;
- keeping of the melting bath at a temperature higher than 1350°C;
- blowing inside of the melting bath of chlorine, or at least an in situ chlorine generating compound, optionally together with at least an inert gas;
- optional stirring of the melted bath in order to favour the chlorine diffusion and kinetics of the process reactions;
- collecting of the gaseous flow exiting from the melting bath and sending thereof, keeping the temperature above 1500°C, to a controlled cooling system;
- controlled cooling of the gaseous flow with selective condensation of chlorides of the different elements of industrial interest, like sodium chloride, iron (III) chloride, gallium (III) chloride, aluminum chloride, titanium (IV) chloride and silicon (IV) chloride;
- separated collection of individual chlorides
- optional further purification of each of collected chlorides by fractional distillation.

2. The process according to claim 1, wherein the drying is carried out at a temperature in the range from 100 to 115°C.

3. The process according to claim 1 or 2, wherein the roasting is carried out at a temperature in the range from 600 to 800°C.

4. The process according to any of the preceding claims, wherein the melting of the to be treated material, optionally dried and/or roasted, is carried out in a reactor selected from the group comprising electric arc furnace (EAF, Electric Arc Furnace) and transferred arc plasma reactor.

5. The process according to any of the preceding claims, wherein the melting bath is kept at a temperature in the range from 1400 to 1500°C.

6. The process according to any of the preceding claims, wherein the chlorine generating compounds in the melting bath are selected from the group comprising hydrochloric acid, calcium chloride and organochlorine compounds, such as carbon tetrachloride, perchloroethylene, chloroform and mixtures thereof.

7. The process according to any of the preceding claims wherein, when the melting is carried out in transferred arc plasma reactor, chlorine, optionally generated in situ, is used as plasma generating gas, optionally in combination with at least one plasma generating inert gas.

8. The process according to claim 7, wherein the plasma generating inert gas is argon.

9. The process according to any of the preceding claims, wherein the controlled cooling of the gaseous flow with selective condensation of chlorides of the different elements of industrial interest contained in the to be treated material is carried out in a condensation system selected from the group consisting of condensation reactors, condensation columns and tube bundle condenser.

10. The process according to the preceding claim, wherein the condensation system consists of a multistage system of serially arranged condensation reactors.

11. The process according to claim 10, wherein the temperatures of the multistage serially arranged reactors are controlled as below reported in order to carry out the condensation and thus the separation of desired chlorides :
- 900-1400°C - sodium chloride condensation;
- 310°C - iron (III) chloride condensation;
- 201°C - gallium (III) chloride condensation
- 180°C - aluminum chloride condensation;
- 100-130°C - titanium (IV) chloride condensation;
- 25-50°C - silicon (IV) chloride condensation

12. The process according to any of the preceding claims, wherein non-reacted chlorine and used inert gas are recovered and recycled.

13. The process according to claim 12, wherein unreacted chlorine and used inert gas are recovered by means of molecular sieves.

## Patentansprüche

1. Verfahren zur Extraktion von voneinander getrennten Produkten von industriellem Interesse aus Bauxit und aus Rotschlamm, der beim Verarbeiten von Bauxit anfällt, wobei das Verfahren die nachstehenden Schritte umfasst:
- gegebenenfalls Zerkleinern und/oder Trocknen des zu behandelnden Materials bei einer Temperatur von 60 bis 250°C;
- gegebenenfalls Rösten des getrockneten Materials;
- Schmelzen des erhaltenen Materials;
- Halten des Schmelzbades bei einer Temperatur höher als 1350°C;
- Einleiten von Chlor oder mindestens einer in situ Chlor erzeugenden Verbindung, gegebenenfalls zusammen mit mindestens einem Inertgas, in das Schmelzbad;
- gegebenenfalls Rühren des geschmolzenen Bades, um die Chlordiffusion und Kinetik der Verfahrensreaktionen zu begünstigen;
- Sammeln des Gasstroms, der das Schmelzbad verlässt und Senden desselben, bei Halten der Temperatur oberhalb 1500°C, zu einem gesteuerten Kühlsystem;
- gesteuertes Kühlen des Gasstroms mit selektiver Kondensation von Chloriden der verschiedenen Elemente von industriellem Interesse, wie Natriumchlorid, Eisen(III)chlorid, Gallium(III)chlorid, Aluminiumchlorid, Titan(IV)chlorid und Silizium(IV)chlorid;
- getrennte Sammlung von einzelnen Chloriden
- gegebenenfalls weitere Reinigung von jedem der gesammelten Chloride durch fraktionierte Destillation.

2. Verfahren nach Anspruch 1, wobei das Trocknen bei einer Temperatur im Bereich von 100 bis 115°C ausgeführt wird.

3. Verfahren nach Anspruch 1 oder 2, wobei das Rösten bei einer Temperatur im Bereich von 600 bis 800°C ausgeführt wird.

4. Verfahren nach einem der vorstehenden Ansprüche, wobei das Schmelzen des zu behandelnden Materials, gegebenenfalls getrocknet und/oder geröstet, in einem Reaktor, ausgewählt aus der Gruppe, umfassend Elektrolichtbogenofen (EAF, Electric Arc Furnace) und Plasmareaktor mit übertragenem Lichtbogen, ausgeführt wird.

5. Verfahren nach einem der vorstehenden Ansprüche, wobei das Schmelzbad bei einer Temperatur im Bereich von 1400 bis 1500°C gehalten wird.

6. Verfahren nach einem der vorstehenden Ansprüche, wobei die Chlor erzeugenden Verbindungen in dem Schmelzbad ausgewählt sind aus der Gruppe, umfassend Chlorwasserstoffsäure, Calciumchlorid und Organochlorverbindungen, wie Tetrachlorkohlenstoff, Perchlorethylen, Chloroform und Gemischen davon.

7. Verfahren nach einem der vorstehenden Ansprüche, wobei, wenn das Schmelzen in einem Plasmareaktor mit übertragenem Lichtbogen ausgeführt wird, gegebenenfalls in situ erzeugtes Chlor als Plasma erzeugendes Gas, gegebenenfalls in Kombination mit mindestens einem Plasma erzeugenden Inertgas, verwendet wird.

8. Verfahren nach Anspruch 7, wobei das Plasma erzeugende Inertgas Argon ist.

9. Verfahren nach einem der vorstehenden Ansprüche, wobei das gesteuerte Kühlen des Gasstroms mit selektiver Kondensation von Chloriden der verschiedenen Elemente von industriellem Interesse, die in dem zu behandelnden Material enthalten sind, in einem Kondensationssystem, ausgewählt aus der Gruppe, bestehend aus Kondensationsreaktoren, Kondensationskolonnen und Rohrbündelkühler, ausgeführt wird.

10. Verfahren nach dem vorstehenden Anspruch, wobei das Kondensationssystem aus einem Mehrstufensystem von in Reihe angeordneten Kondensationsreaktoren besteht.

11. Verfahren nach Anspruch 10, wobei die Temperaturen der mehrstufig in Reihe angeordneten Reaktoren gesteuert werden, wie nachstehend angeführt, um die Kondensation und somit die Trennung der gewünschten Chloride auszuführen:
- 900-1400°C - Natriumchloridkondensation;
- 310°C - Eisen(III)chloridkondensation;
- 201°C - Gallium(III)chloridkondensation
- 180°C - Aluminiumchloridkondensation;
- 100-130°C - Titan(IV)chloridkondensation;
- 25-50°C - Silizium(IV)chloridkondensation

12. Verfahren nach einem der vorstehenden Ansprüche, wobei nicht umgesetztes Chlor und verwendetes Inertgas wiedergewonnen und recycelt werden.

13. Verfahren nach Anspruch 12, wobei nicht umgesetztes Chlor und verwendetes Inertgas mit Hilfe von Molekularsieben wiedergewonnen werden.

## Revendications

1. Procédé d'extraction, à partir de la bauxite et des boues rouges résultant du traitement de la bauxite, de produits présentant un intérêt industriel, séparés les uns des autres, ledit procédé comprenant les étapes suivantes :
- le broyage et/ou séchage facultatif du matériau devant être traité à une température allant de 60 à 250°C ;
- le rôtissage facultatif du matériau séché ;
- la fonte du matériau résultant ;
- le maintien du bain de fusion à une température supérieure à 1350°C ;
- le soufflage de chlore dans le bain de fusion, ou au moins d'un composé générant du chlore in situ, facultativement ensemble avec au moins un gaz inerte ;
- l'agitation facultative du bain fondu afin de favoriser la diffusion du chlore et la cinétique des réactions du procédé ;
- la collecte du flux gazeux sortant du bain de fusion et l'envoi de celui-ci, en maintenant la température au-dessus de 1500°C, vers un système de refroidissement contrôlé ;
- le refroidissement contrôlé du flux gazeux avec une condensation sélective des chlorures des différents éléments présentant un intérêt industriel, tel que le chlorure de sodium, le chlorure de fer (III), le chlorure de gallium (III), le chlorure d'aluminium, le chlorure de titane (IV) et le chlorure de silicium (IV) ;
- la collecte séparée des chlorures individuels
- la purification facultative supplémentaire de chacun des chlorures collectés par distillation fractionnelle.

2. Procédé selon la revendication 1, dans lequel le séchage est réalisé à une température dans la plage allant de 100 à 115 °C.

3. Procédé selon la revendication 1 ou 2, dans lequel le rôtissage est réalisé à une température dans la plage allant de 600 à 800 °C.

4. Procédé selon l'une quelconque des revendications précédentes, dans lequel la fonte du matériau devant être traité, facultativement séché et/ou rôti, est réalisée dans un réacteur sélectionné dans le groupe comprenant un four à arc électrique (FAE, Four à Arc Electrique) et d'un réacteur plasma à arc transféré.

5. Procédé selon l'une quelconque des revendications précédentes, dans lequel le bain de fusion est maintenu à une température dans la plage allant de 1400 à 1500°C.

6. Procédé selon l'une quelconque des revendications précédentes, dans lequel les composés générant du chlore dans le bain de fusion sont sélectionnés dans le groupe comprenant l'acide chlorhydrique, le chlorure de calcium et des composés organochlorés, tels que le tétrachlorure de carbone, le perchloroéthylène, le chloroforme et des mélanges de ceux-ci.

7. Procédé selon l'une quelconque des revendications précédentes dans lequel, lorsque la fonte est réalisée dans un réacteur plasma à arc transféré, le chlore, facultativement généré in situ, est utilisé en tant que gaz générant du plasma, facultativement en combinaison avec au moins un gaz inerte générant du plasma.

8. Procédé selon la revendication 7, dans lequel le gaz inerte générant du plasma est l'argon.

9. Procédé selon l'une quelconque des revendications précédentes, dans lequel le refroidissement contrôlé du flux gazeux avec une condensation sélective de chlorures des différents éléments présentant un intérêt industriel contenus dans le matériau devant être traité est réalisé dans un système de condensation sélectionné dans le groupe constitué de réacteurs de condensation, de colonnes de condensation et d'un condenseur à faisceau tubulaire.

10. Procédé selon la revendication précédente, dans lequel le système de condensation consiste en un système à plusieurs étages de réacteurs de condensation arrangés en série.

11. Procédé selon la revendication 10, dans lequel les températures des réacteurs arrangés en série en plusieurs étages sont contrôlés comme indiqué ci-dessous afin de réaliser la condensation et ainsi la séparation des chlorures désirés :
- 900 à 1400°C - condensation du chlorure de sodium ;
- 310°C - condensation du chlorure de fer (III) ;
- 201°C - condensation du chlorure de gallium (III) ;
- 180°C - condensation du chlorure d'aluminium ;
- 100 à 130°C - condensation du chlorure de titane (IV) ;
- 25 à 50°C - condensation du chlorure de silicium (IV)

12. Procédé selon l'une quelconque des revendications précédentes, dans lequel du chlore n'ayant pas réagi et du gaz inerte utilisé sont récupérés et recyclés.

13. Procédé selon la revendication 12, dans lequel du chlore n'ayant pas réagi et du gaz inerte utilisé sont récupérés au moyen de tamis moléculaire.
